# EUROPEAN PATENT APPLICATION

(11) **EP 4 841 464 A1**
(43) Date of publication of application: **18.11.2026**
(21) Application number: 24916731.3
(22) Date of filing: 24.12.2024
(51) Int. Cl.: G06F 16/332

(54) **MULTI-AGENT SYSTEM-BASED INFORMATION PROCESSING METHOD AND MULTI-AGENT SYSTEM**

(30) Priority: 12.01.2024 CN 202410052559
(71) Applicant: Alibaba Innovation Private Limited, Singapore 189554 (SG)
(72) Inventor: YU, Haiyang, Beijing 100020 (CN); LI, Yongbin, Beijing 100020 (CN); HUANG, Fei, Alma (US)
(74) Representative: Barker Brettell LLP
(86) International application number: PCT/CN2024/141877
(87) International publication number: WO 2025/148684

(57) **Abstract**

The present disclosure provides an information processing method based on a multi-agent system and a multi-agent system. The multi-agent system includes a plurality of agents. The method is applied to a target agent, and the target agent is any agent in the plurality of agents. The method includes: determining to-be-processed information corresponding to the target agent; determining, based on an information processing model when the to-be-processed information does not match a function corresponding to the target agent, an agent whose function matches the to-be-processed information; and sending the to-be-processed information to the matching agent for processing. In the present disclosure, an analysis capability of the information processing model can be used to quickly and accurately implement flowing of to-be-processed information between agents, and the to-be-processed information is processed by an appropriate agent, thereby effectively improving a task processing effect.

## Description

The present disclosure claims priority to Chinese Patent Application No. 202410052559.2, filed with the China National Intellectual Property Administration on January 12, 2024 and entitled "INFORMATION PROCESSING METHOD BASED ON MULTI-AGENT SYSTEM AND MULTI-AGENT SYSTEM", which is incorporated herein by reference in its entirety.

### TECHNICAL FIELD

The present disclosure relates to artificial intelligence technologies, and in particular, to an information processing method based on a multi-agent system and a multi-agent system.

### BACKGROUND

With continuous development of artificial intelligence, an agent (Agent) technology has attracted increasing attention, and gradually becomes an important research topic in the field of artificial intelligence.

Currently, how to effectively use an agent to process a task and ensure a task processing effect is a problem that needs to be resolved.

### SUMMARY

The present disclosure provides an information processing method based on a multi-agent system and a multi-agent system, to improve a task processing effect of an agent.

According to a first aspect, an embodiment of the present disclosure provides an information processing method based on a multi-agent system, the multi-agent system including a plurality of agents; where the method is applied to a target agent, the target agent being any agent in the plurality of agents, and the method includes:
determining to-be-processed information corresponding to the target agent;
determining, based on an information processing model when the to-be-processed information does not match a function corresponding to the target agent, an agent whose function matches the to-be-processed information; and
sending the to-be-processed information to the matching agent for processing.

Optionally, the information processing model is configured to: generate corresponding reply information when the to-be-processed information matches the function corresponding to the target agent; and output an identifier of the agent matching the to-be-processed information when the to-be-processed information does not match the function corresponding to the target agent.

Optionally, the determining, based on an information processing model when the to-be-processed information does not match a function corresponding to the target agent, an agent whose function matches the to-be-processed information includes:
inputting the to-be-processed information and description information of a function corresponding to each agent in the plurality of agents into the information processing model, to enable the information processing model to determine the agent whose function matches the to-be-processed information when the to-be-processed information does not match the function corresponding to the target agent.

Optionally, the inputting the to-be-processed information and description information of a function corresponding to each agent in the plurality of agents into the information processing model includes:
inputting the to-be-processed information, the description information of the function corresponding to the target agent, and first prompt information into the information processing model, the first prompt information being used for prompting the information processing model to generate corresponding reply information when it is determined, according to the to-be-processed information and the description information, that the to-be-processed information matches the function corresponding to the target agent, and output preset information used for indicating that a reply cannot be made when the to-be-processed information does not match the function corresponding to the target agent; and
inputting the to-be-processed information, description information of functions corresponding to remaining agents, and second prompt information into the information processing model if an output of the information processing model is the preset information, the remaining agents being agents in the plurality of agents other than the target agent, and the second prompt information being used for prompting the information processing model to determine, according to the to-be-processed information and the description information corresponding to the remaining agents, the agent whose function matches the to-be-processed information.

Optionally, the inputting the to-be-processed information and description information of a function corresponding to each agent in the plurality of agents into the information processing model includes:
inputting the to-be-processed information, the description information of the function corresponding to each agent in the plurality of agents, and third prompt information into the information processing model;
where the third prompt information is used for prompting the information processing model to determine, according to the to-be-processed information and the description information of the function corresponding to each agent, whether the to-be-processed information matches the function corresponding to the target agent, generate corresponding reply information when the to-be-processed information matches the function corresponding to the target agent, and determine the agent whose function matches the to-be-processed information when the to-be-processed information does not match the function corresponding to the target agent.

Optionally, information inputted into the information processing model further includes fourth prompt information; and
the fourth prompt information is used for prompting the information processing model to reply to the to-be-processed information according to knowledge learned in a training process when it is determined that there is no agent in the plurality of agents whose function matches the to-be-processed information.

Optionally, the to-be-processed information includes the input information of the user; and
the target agent is an agent tagged as an entry agent in the multi-agent system; and the to-be-processed information inputted into the multi-agent system is received and processed by the entry agent.

Optionally, the multi-agent system is configured to perform at least one round of dialog with the user; in any round, the to-be-processed information inputted into the multi-agent system includes input information of the user in the round; and
the sending the to-be-processed information to the matching agent for processing includes:
sending the to-be-processed information to the matching agent for processing, and transferring a tag of the entry agent to the matching agent, to receive and process to-be-processed information inputted into the multi-agent system in a next round by using the matching agent;
where the entry agent corresponding to the first round is an agent preselected in the multi-agent system.

Optionally, the to-be-processed information includes the input information of the user; and the sending the to-be-processed information to the matching agent for processing includes:
obtaining perception configuration information, the perception configuration information being used for indicating whether to notify the user of a transfer of the to-be-processed information to the matching agent for processing; and
if yes, notifying the user of a transfer behavior and transferring the to-be-processed information to the matching agent for processing.

Optionally, the method further includes:
sending the description information of the function corresponding to the target agent to the remaining agents in the multi-agent system after the multi-agent system is constructed, and receiving description information of corresponding functions that is sent by the remaining agents; and
storing the received description information into a memory module, to read the description information corresponding to each agent from the memory module and input the description information into the information processing model for processing when the to-be-processed information is obtained.

According to a second aspect, an embodiment of the present disclosure provides a method for constructing a multi-agent system, including:
outputting a list of agents included in an agent resource library, where the agent resource library includes at least two trained agents;
obtaining a plurality of agents selected by a customer for a target application from the list; and
constructing a multi-agent system corresponding to the target application according to the agents selected by the customer;
where any agent in the multi-agent system is configured to perform the method according to any implementation of the first aspect.

Optionally, the method further includes:
sending a notification message to each agent in the multi-agent system after the multi-agent system corresponding to the target application is constructed, the notification message being used for indicating the plurality of agents to mutually forward description information of functions corresponding to the plurality of agents.

Optionally, the method further includes at least one of the following:
obtaining an agent trained or uploaded by the customer, and adding the agent trained or uploaded by the customer to the agent resource library;
obtaining description information added by the customer for one or more agents in the agent resource library;
obtaining an entry agent and/or entry configuration information that is specified by the customer for the multi-agent system, the entry configuration information being used for indicating whether to transfer a tag of the entry agent to a matching agent when to-be-processed information does not match a function of a current entry agent; and
obtaining perception configuration information configured by the customer for the multi-agent system; where the perception configuration information is used for indicating whether to notify a user of a transfer of the to-be-processed information to the matching agent for processing.

Optionally, the method further includes:
obtaining function and/or capability requirement information inputted by the customer for one or more agents in the agent resource library; and
determining a capability enhancement manner corresponding to each agent according to the function and/or capability requirement information of the each agent, to process each agent according to the corresponding capability enhancement manner;
where the capability enhancement manner includes at least one of the following: performing fine tuning on an information processing model in the agent, performing reinforcement learning on the single agent, performing reinforcement learning together with other agents, or configuring prompt information for the agent.

According to a third aspect, an embodiment of the present disclosure further provides an information processing method based on a multi-agent system, including:
obtaining to-be-processed information corresponding to the multi-agent system;
determining an entry agent in the multi-agent system; and
sending the to-be-processed information to the entry agent, to enable the entry agent to generate corresponding reply information when the to-be-processed information matches a function of the entry agent, determine, based on an information processing model, an agent in the multi-agent system whose function matches the to-be-processed information when the to-be-processed information does not match the function of the entry agent, and send the to-be-processed information to the matching agent for processing.

According to a fourth aspect, an embodiment of the present disclosure further provides an information processing method based on a multi-agent system, the multi-agent system including a plurality of agents; the method is applied to a target agent in the plurality of agents; and the method includes:
obtaining input information of a user;
generating corresponding reply information by using an information processing model if the input information matches a function corresponding to the target agent; and
sending the input information to an agent whose function matches the input information for processing, if the input information does not match the function corresponding to the target agent; where the matching agent is determined by using the information processing model.

Optionally, the input information and the reply information are presented on a group chat interface; and
the sending the input information to an agent whose function matches the input information for processing includes:
obtaining perception configuration information, the perception configuration information being used for indicating whether to notify the user of a transfer of the to-be-processed information to the matching agent for processing; and
if yes, notifying the user of a transfer behavior by using the group chat interface, and transferring the input information to the matching agent for processing, to enable the matching agent to generate corresponding reply information and present the corresponding reply information to the user by using the group chat interface.

According to a fifth aspect, an embodiment of the present disclosure further provides an information processing method, where the method includes:
obtaining to-be-processed information;
inputting the to-be-processed information and description information of functions corresponding to a plurality of information processing models into a target information processing model, to enable the target information processing model to output corresponding reply information when the to-be-processed information matches a function of the target information processing model, and determine an information processing model in the plurality of information processing models that matches the to-be-processed information when the to-be-processed information does not match the function of the target information processing model; where the target information processing model is any information processing model in the plurality of information processing models; and
sending the to-be-processed information to the matching information processing model for processing, if an output of the target information processing model is used to represent the matching information processing model.

According to a sixth aspect, an embodiment of the present disclosure further provides a multi-agent system, including a plurality of agents, the agents being configured to perform the method according to any one of the first aspect or the fourth aspect.

According to a seventh aspect, an embodiment of the present disclosure further provides a multi-agent-based application platform, including a control module and an agent resource library;
the control module being configured to perform the method according to any one of the second aspect or the third aspect.

According to an eighth aspect, an embodiment of the present disclosure provides an electronic device, including:
at least one processor; and
a memory in a communication connection with the at least one processor;
the memory stores instructions executable by the at least one processor, and the instructions is executed by the at least one processor to enable the electronic device to perform the method according to any one of the foregoing aspects.

According to a ninth aspect, an embodiment of the present disclosure provides a computer-readable storage medium, where the computer-readable storage medium stores computer executable instructions, and when a processor executes the computer executable instructions, the method according to any one of the foregoing aspects is implemented.

According to a tenth aspect, an embodiment of the present disclosure provides a computer program product, including a computer program, where the method according to any one of the foregoing aspects is implemented when the computer program is executed by a processor.

According to the information processing method based on a multi-agent system and the multi-agent system that are provided in the embodiments of the present disclosure, the multi-agent system can be constructed based on a plurality of agents. The multi-agent system is used to implement task processing, and the task is better completed by means of cooperation between functions of the agents. In addition, after any target agent in the multi-agent system receives the to-be-processed information, if the to-be-processed information does not fall within a functional scope of the target agent, an agent matching the to-be-processed information can be determined by using the information processing model corresponding to the target agent, and the to-be-processed information is transferred to the matching agent for processing. Therefore, understanding and analysis capabilities of the information processing model are used to quickly and accurately implement flowing of the to-be-processed information between the agents, and the to-be-processed information is processed by an appropriate agent, thereby effectively improving a task processing effect.

### BRIEF DESCRIPTION OF DRAWINGS

The accompanying drawings herein are incorporated into the specification and constitute a part of this specification, show embodiments that conform to the present disclosure, and are used for describing a principle of the present disclosure together with this specification.
FIG. 1 is a schematic diagram of an application scenario according to an embodiment of the present disclosure;
FIG. 2 is a schematic flowchart of an information processing method based on a multi-agent system according to an embodiment of the present disclosure;
FIG. 3 is a schematic diagram of an interaction principle of agents according to an embodiment of the present disclosure;
FIG. 4 is a schematic architecture diagram of an agent according to an embodiment of the present disclosure;
FIG. 5 is a schematic flowchart of a method for constructing a multi-agent system according to an embodiment of the present disclosure;
FIG. 6 is a schematic diagram of a construction principle of a multi-agent system of a target application according to an embodiment of the present disclosure;
FIG. 7 is a schematic diagram of an interaction interface according to an embodiment of the present disclosure;
FIG. 8 is a schematic flowchart of another information processing method based on a multi-agent system according to an embodiment of the present disclosure;
FIG. 9 is a schematic diagram of a group chat interface according to an embodiment of the present disclosure; and
FIG. 10 is a schematic structural diagram of an electronic device according to an embodiment of the present disclosure.

The accompanying drawings have shown specific embodiments of the present disclosure, and more detailed descriptions are provided below. These accompanying drawings and literal descriptions are not intended to limit the scope of the idea of the present disclosure in any manner, but to describe the concept of the present disclosure for a person skilled in the art with reference to particular embodiments.

### DESCRIPTION OF EMBODIMENTS

Exemplary embodiments are described in detail here, which are exemplarily shown in the drawings. The implementations described in the following exemplary embodiments do not represent all implementations consistent with the present disclosure.

It should be noted that user information (including, but not limited to, user equipment information, user attribute information, and the like) and data (including, but not limited to, data for analysis, stored data, displayed data, and the like) involved in the present disclosure are information and data that are authorized by a user or that are sufficiently authorized by all parties. Related data needs to be collected, used, and processed by complying with related laws and regulations and standards, and a corresponding operation entry is provided for the user to select to authorize or reject.

Embodiments of the present disclosure may be implemented by using a large model, for example, a large language model. The large language model refers to a deep learning language model having large-scale language model parameters, and usually includes hundreds of millions, tens of billions, hundreds of billions, trillions, and even tens of trillions of language model parameters. The large language model may also be referred to as a cornerstone language model/foundation model (Foundation Model). The large language model is pre-trained by using large-scale unmarked corpus data, to obtain a pre-trained language model with more than a hundred million parameters. Such a language model can adapt to a wide range of downstream tasks, and the language model has a good generalization capability, for example, a large language model (Large Language Model, LLM) or a multi-modal pre-training model (multi-modal pre-training model).

During actual application, the large language model may be applied to different tasks by using only a small quantity of samples to fine-tune the pre-trained language model. The large language model may be widely applied to fields such as natural language processing (Natural Language Processing, NLP for short) and computer vision, and specifically may be applied to computer vision field tasks such as visual question answering (Visual Question Answering, VQA for short), image caption (Image Caption, IC for short), and image generation, and natural language processing field tasks such as text-based sentiment classification, text abstract generation, and machine translation. Main application scenarios of the large language model include a digital assistant, an intelligent robot, search, online education, office software, e-commerce, intelligent design, and the like.

First, terms involved in the present disclosure are explained.

Agent: an agent is a solution implemented by using a model, and maintains description information of functions, description information of input and output, and the like.

Multi-agent group chat: a plurality of agents exchange information in a manner of performing pairwise interaction, so as to learn about content performed by other agents.

First, an application scenario of the present disclosure is described below.

The agent may process the task through an interaction process with an external environment, and may be applied to various scenarios in various fields. Optionally, the agent may be implemented based on a trained information processing model, and process the obtained information by using the information processing model. The information processing model may be a large language model, or may be other models. For example, a model with a relatively small amount of parameters may be constructed and trained as the information processing model.

Taking an intelligent customer service scenario as an example, the agent may obtain input information from a user, generate reply information corresponding to the input information based on the information processing model, and output the same to the user. During the interaction with the user, the agent may also implement operations such as API (Application Programming Interface, Application Programming Interface) calls and document retrieval, based on the information processing model, thereby better addressing the user' demands.

As user demands continue to grow, a single agent is no longer capable of satisfactorily completing user tasks. Therefore, it is considered that interaction with the user may be implemented based on a multi-agent system, where the multi-agent system may include a plurality of agents. The plurality of agents correspond to different functionalities and are each specialized in handling particular types of content, thereby enabling better service to the user by leveraging the capabilities of the plurality of agents. How to implement scheduling of a plurality of agents is a problem that needs to be resolved.

Specifically, when a user is engaged in a dialogue with a particular agent within a multi-agent system, the user may raise a request that this agent is unable to handle. In such a case, a switch to another agent may be made for processing. However, when a switch is required, the current agent may not be aware of which agent is capable of handling the request, thereby presenting a difficulty in the switching process.

For example, a user is currently asking a question based on a document, and an agent responsible for document-based question-answering is interacting with the user. After a plurality of rounds of questioning, a summary needs to be generated based on the preceding dialogue information. However, the conventional document-based question-answering agent is only proficient at retrieving answers from the document and lacks strong capability in handling summarization. In this situation, an agent responsible for summary generation needs to be invoked; yet, how to effectuate such invocation presents a challenge.

To resolve the foregoing problem, consideration may be given to employing the concept of MoE (Mixture of Experts, Mixture of Experts). MoE is a deep learning architecture, the core idea of which is to combine a number of smaller, domain-specific learning models (referred to as expert models) so as to implement learning and inference over a larger dataset. That is, the MoE is a divide-and-conquer strategy, and is used to construct a larger model that includes many small specialized models.

The MoE uses a gating model to effectively use a plurality of expert models. Specifically, the gating model may dynamically determine, according to a feature of input information, which expert model or which expert models perform processing, to obtain a final output result.

However, in the MoE solution, design and training of a gating mechanism are a challenge. A gating model and a plurality of expert models need to be trained to effectively balance contributions between different expert models, causing problems such as a complex processing procedure and large operation overheads.

In view of this, an embodiment of the present disclosure provides a method, which can construct a multi-agent system by using a plurality of agents, and instruct interaction between agents by using natural language understanding capabilities of information processing models in the agents, thereby effectively implementing a conversation with a user.

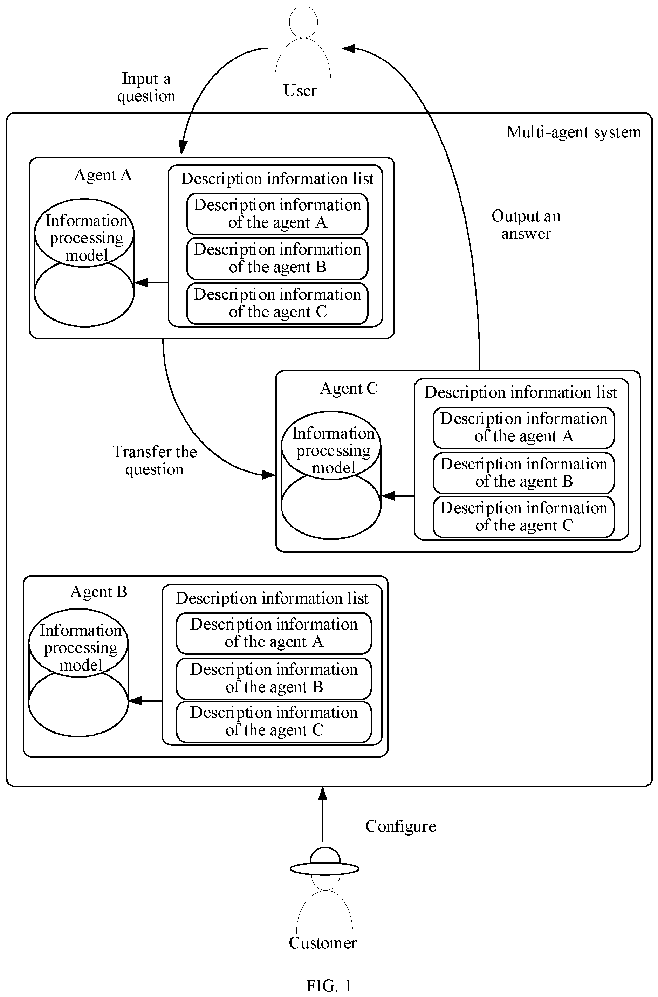

FIG. 1 is a schematic diagram of an application scenario according to an embodiment of the present disclosure. As shown in FIG. 1, a multi-agent system includes a plurality of agents. Each agent may include an information processing model and a description information list. The description information list includes description information of a function corresponding to each agent in the system.

For example, the description information list may include:
description information of an agent A: it is an agent that focuses on document question-answering; if a document and a question are given, knowledge corresponding to the question can be found from the document, and an answer corresponding to the question can be generated;
description information of an agent B: it is an agent good at generating an abstract and a gist, and can summarize and generalize given text, generate a corresponding abstract, and extract the gist therein; and
description information of an agent C: it is an agent used for processing a code-related requirement, has some code understanding and generation capabilities, and can implement code generation, code completion, code check, programming suggestions, and the like.

The agents included in the multi-agent system and the description information corresponding to the agents may be configured by the customer.

A "customer" in embodiments of the present disclosure refers to a role that configures a multi-agent system, for example, a customer may be an enterprise customer that provides an intelligent customer service or other types of customers. A "user" refers to a role that interacts with a multi-agent system during actual application.

In a process in which a user interacts with an agent in a multi-agent system, if a question that a current agent cannot answer occurs, which agent can answer the question can be determined by utilizing the understanding of description information by an information processing model, and the question is transferred to a corresponding agent for processing.

For example, in a process in which the user interacts with the agent A, the user may ask a question according to a document, and the agent A answers the question. In the interaction process, if the user inputs a question of requiring code generation, the information processing model of the agent A determines that it cannot resolve the question itself. In addition, by analyzing description information of each agent, the information processing model of the agent A can know that the agent C can process the question, and the question can be transferred to the agent C for processing.

In the foregoing manner, an agent can fully understand, by using a natural language understanding capability of a model, a field that each of the other agents is good at; and in a process of interacting with a user, the agent can transfer a question that cannot be resolved by this agent to an agent good at this question for processing. Overall, an intelligent customer service function implemented by using the multi-agent system can allow a question of the user to flow between a plurality of agents, so as to quickly and accurately select an appropriate agent to answer the user, thereby improving an effect of interacting with the user.

In addition, the entire process does not require intervention of a gating model, thereby avoiding design and training of a gating mechanism, and a plurality of agents can be organized without re-training. The processing procedure is simple and clear, and does not need additional operation overheads.

The following describes some implementations of the present disclosure in detail with reference to the accompanying drawings. Embodiments and features in embodiments may be mutually combined in a case that no conflict occurs between the embodiments. In addition, a sequence of steps in the following method embodiments is only an example and not a strict limitation.

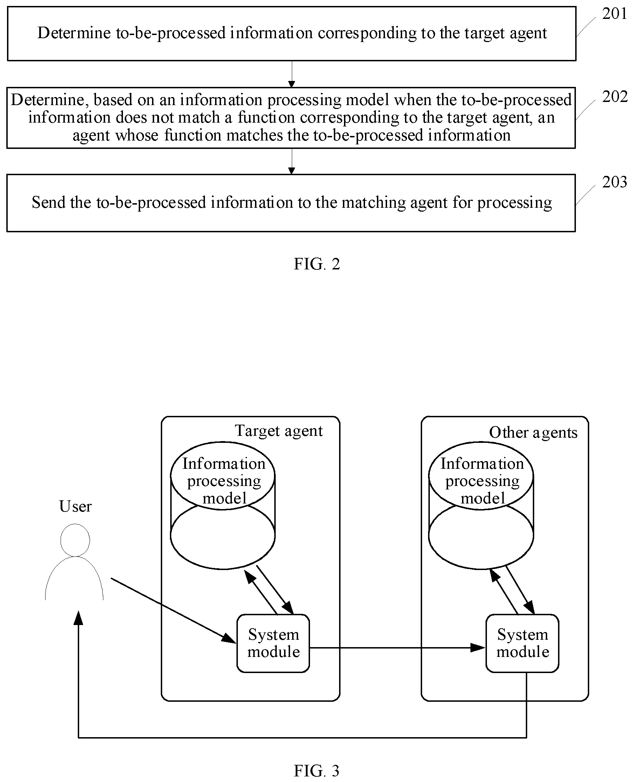

FIG. 2 is a schematic flowchart of an information processing method based on a multi-agent system according to an embodiment of the present disclosure. In this embodiment, a deployment manner of the multi-agent system is not limited. For example, the multi-agent system may be deployed locally, implemented in a cloud, implemented by a client, or implemented by an IOT (Internet of Things, Internet of Things) device, etc.

The multi-agent system includes a plurality of agents. Optionally, the plurality of agents may respectively correspond to different functions. Alternatively, some of the plurality of agents may correspond to a same function. The functions may be set as actually required. For example, the functions may include: mathematics question solution, translation, abstract generation, code-related requirements, image-processing-related requirements, and the like. Different agents may correspond to different functions.

The method is applied to a target agent, and the target agent is any agent in the plurality of agents. As shown in FIG. 2, the method includes the following steps.

Step 201: Determine to-be-processed information corresponding to the target agent.

Optionally, the target agent may implement a corresponding function based on an information processing model, and the information processing model may be a trained model.

An optional architecture is: the target agent includes an information processing model, and a corresponding function is completed by using the information processing model. For example, the target agent is an agent good at processing mathematical questions, and an information processing model corresponding to the target agent may be an information processing model good at processing mathematical questions. A to-be-solved mathematical question is inputted into the information processing model, to obtain a corresponding result.

The target agent may correspond to one or more functions. The function corresponding to the target agent may be consistent with a function corresponding to the information processing model, or may not be limited to a function corresponding to the information processing model.

For example, in addition to the information processing model, the target agent may further include one or more plug-ins or other modules. More capabilities are implemented by using the plug-ins or the other modules. For example, operations such as logging in to a browser, downloading a document, and invoking an API may be implemented by using the plug-ins. Therefore, the target agent may have richer capabilities than the information processing model.

In addition to the architecture of the target agent including the information processing model, the information processing model and the target agent may also be two separate parts, provided that the function corresponding to the target agent can be implemented by using the capability of the information processing model.

The target agent may be configured to interact with the environment, and the to-be-processed information may include information obtained by the target agent from the environment. The environment may be anything other than the target agent. For example, the environment may include a user, an API system, a document system, other agents, and the like.

The target agent may simulate a process of interaction between a human and an environment, obtain some information from the environment, make a decision according to the information, and determine a behavior to be executed (output information) in the next step. After the behavior acts on the environment, the target agent may further obtain information from the environment, and further make a decision and a behavior. In this way, the task can be processed by means of interaction with the environment.

Optionally, if the environment includes a user, the target agent may interact with the user. Information obtained from the environment may include input information of the user, and information outputted to the environment may include output information of the target agent for the user. For example, the user may input a question and the target agent makes an answer, or the target agent asks the user some questions and the user answers the questions.

If the environment includes an API system, the target agent may invoke the API through interaction with the API system. Specifically, the API system may include a plurality of APIs. The output information of the agent may include a name and an input parameter value of a to-be-invoked API, so that the API system may return an output parameter value of the corresponding API according to the name and the input parameter value of the API. Correspondingly, the information obtained by the target agent may be the output parameter value of the API.

If the environment includes a document system, the target agent may implement document query through interaction with the document system. Specifically, the document system may include a plurality of documents. The information outputted by the agent may include to-be-queried information, so that the document system can determine a corresponding document according to the to-be-queried information. Correspondingly, the information obtained by the target agent may be the document matching the to-be-queried information.

If the environment includes other agents, the information outputted by the target agent to the environment may include information that other agents are instructed to process. For example, the target agent determines that the agent A can process a requirement, and may send the requirement to the agent A, and obtain a processing result corresponding to the agent A. The other agents may be other agents in the multi-agent system, or may be an agent outside the system. This is not limited herein.

Optionally, the environment may also include objects of a plurality of types. For example, the environment may include both an API system and a user. The target agent may output greeting information to the user, and obtain a requirement inputted by the user. By analyzing the requirement, the target agent finds that an API may be invoked to assist in implementing the requirement, and may interact with the API system, and output a corresponding result to the user according to information returned by the API system.

The to-be-processed information in this embodiment may be information corresponding to a to-be-processed task, and one task may correspond to one or more pieces of to-be-processed information. The task may be set according to an actual requirement. For example, the task may be: answering a user question, guiding a user to perform a procedure, chatting with a user, implementing a requirement, or the like.

For example, the to-be-processed task may be answering a user question. The user may have one or more questions, and each question may be used as to-be-processed information.

When there are a plurality of pieces of to-be-processed information, the method according to this embodiment may be performed for each piece of to-be-processed information.

Step 202: Determine, based on an information processing model when the to-be-processed information does not match a function corresponding to the target agent, an agent whose function matches the to-be-processed information.

That the to-be-processed information matches the function means that the function possessed by the target agent is suitable for processing the to-be-processed information, or can process the to-be-processed information. There may be a plurality of implementation solutions for the model to determine whether the to-be-processed information matches the function.

Optionally, whether the to-be-processed information matches the function may be determined by using a capability of the model itself. Alternatively, whether the to-be-processed information matches the function may be restricted by a customer according to an actual situation. The former may be implemented by means of prompt information, and the latter may be implemented by means of a training process. Details are separately described below.

In an optional implementation solution, the model has a natural language understanding and analysis capability, and can determine, according to understanding of the model for the to-be-processed information and the function, whether the to-be-processed information matches the function.

Specifically, given one piece of to-be-processed information and a function of one agent, the model can determine whether the to-be-processed information matches the function of the agent. Given one piece of to-be-processed information and functions of a plurality of agents, the model can determine which agent among the plurality of agents has a function matching the to-be-processed information.

Optionally, prompt information may be used to enable the model to determine an agent whose function matches the to-be-processed information. For example, when the to-be-processed information is input information of a user, the information inputted into the model may be:
"The input information of the user is XXXXX, and you are an agent having an XXX function. Please determine whether the input information of the user falls within your capability range (whether the input information matches your function):
process the input information of the user if the input information falls within your capability range (if matching); and
if the input information does not fall within your capability range (if not matching), select an appropriate agent for processing (determine a matching agent) based on functions of other agents. The functions of other agents are as follows:
   the agent A has a function of XXXX; the agent B has a function of XXXX; and the agent C has a function of XXXX."

The model may analyze the input information of the user and the function possessed by the target agent according to the foregoing prompt, process the input information of the user when the input information of the user matches the function, and determine, according to the functions of other agents, which agent can process the input information of the user when the input information of the user does not match the function.

For example, the information inputted into the model may be specifically:
"The input information of the user is: 'Write a piece of Python code according to the following content: n digits are given, and the n digits are arranged in descending order; if there is a repeated digit in the n digits, please display the number of times of repetition corresponding to the digit'.

You are an agent used for translating Chinese into English, and please determine whether the input information of the user falls within your capability range:
process the input information of the user if the input information falls within your capability range; and
if the input information does not fall within your capability range, please answer that I am not good at processing this, and determine, according to functions of other agents, which agent is suitable for processing the input information of the user. The functions of other agents are as follows:
   The agent A is configured to generate a corresponding answer based on a document and a question;
   the agent B is configured to generate an image according to text; and
   the agent C is configured to generate code for a plurality of languages such as C, C++, Java, and Python."

Because the model has some understanding and analysis capabilities, whether the input information of the user matches the function of the target agent can be determined according to the input information of the user and the function of the target agent, and when the input information does not match the function of the target agent, the agent whose function matches the input information can be determined and outputted. For example, after the foregoing information is inputted into the model, the model may output "I am not good at processing this, and the agent C is suitable for processing the information". Based on the output of the model, it may be determined that the agent C is the agent whose function matches the input information of the user.

Another optional implementation is: at a training stage, letting the agent learn to accurately reply to the input information, and training the agent to output expected information when the input information exceeds a functional range of the agent. For example, the target agent is an agent focused on translation, and training samples corresponding to the target agent may include:
training sample 1: input information is "Please translate the following content into English: XXXXX", and output information is corresponding English text;
training sample 2: input information is "Please generate a piece of code according to the following content: XXXXXX", and output information is "I am not good at processing this, and a code generation agent can process this";
training sample 3: input information is "Please generate a corresponding image according to the following content: XXXXX", and output information is "I am not good at processing this, and the image generation agent can process this".

The input information of each training sample is inputted into the model, with the aim of obtaining the corresponding output information, so as to train the model to have a corresponding capability. After the training is completed, in actual application, the prompt information may be canceled or weakened, and the model may output an expected answer directly according to the content learned in the training stage. For example, when the input information indicates that the agent is to translate a piece of text, the agent may normally process and output the translated text. If the input information indicates that the agent is to generate a piece of software code, the agent may output "I am not good at processing this, and the code generation agent can process this".

In the foregoing manner, a large language model may be used as the information processing model, and by means of adding the prompt information, the model has a capability of determining whether the to-be-processed information matches a certain function. Alternatively, a large language model is not necessarily used, and the model may be trained in a targeted manner to enable the model to have a corresponding capability.

Step 203: Send the to-be-processed information to the matching agent for processing.

Optionally, the information processing model is configured to: generate corresponding reply information when the to-be-processed information matches the function corresponding to the target agent; and output an identifier of the agent matching the to-be-processed information when the to-be-processed information does not match the function corresponding to the target agent.

Optionally, when the to-be-processed information is information obtained from the environment, if corresponding reply information is generated according to the information processing model, the reply information may be outputted to the environment.

For example, in the field of intelligent customer services, the environment may include a user, the to-be-processed information corresponding to the target agent may include input information of the user, and the corresponding reply information may be an answer outputted to the user.

FIG. 3 is a schematic diagram of an interaction principle of agents according to an embodiment of the present disclosure. As shown in FIG. 3, the target agent and other agents may each include an information processing model and a system (system) module. The system module may be embodied as software, hardware, or a combination of software and hardware. The foregoing steps provided in this embodiment may be specifically performed by the system module in the target agent.

Specifically, the system module may interact with the environment, for example, to obtain input information of a user as to-be-processed information, and input the to-be-processed information into the information processing model. If the to-be-processed information matches the function corresponding to the target agent, the information processing model may generate corresponding reply information, and the system module outputs the reply information to the user.

If the to-be-processed information does not match the function corresponding to the target agent, it is difficult for the information processing model to reply to the to-be-processed information. In this case, the identifier of the agent matching the to-be-processed information may be outputted. After obtaining the identifier of the matching agent, the system module may forward the to-be-processed information to the matching agent for processing.

In the matching agent, after obtaining the to-be-processed information, the system module may input the to-be-processed information into the information processing model of the agent, the information processing model outputs corresponding reply information, and the system module of the agent outputs the reply information to the user.

In the foregoing manner, the capability of the information processing model can be used to provide the corresponding reply information when the to-be-processed information can be processed, and to determine, when it is difficult to correctly process the information, an agent that can process the information, and transfer the information to the corresponding agent for processing, so that the capability of the information processing model is fully used to perform reply generation or transfer processing on the to-be-processed information, thereby improving the processing effect of the target agent on the to-be-processed information.

In addition to the solution in which the information processing model directly generates the reply information according to the to-be-processed information, the reply information may also be generated by using other modules. For example, a related document may be first queried according to the to-be-processed information, and the document and the to-be-processed information are both inputted into the information processing model, to obtain corresponding reply information. Alternatively, the to-be-processed information may be first inputted into the information processing model, to obtain an intermediate result, and then other operations are performed according to the intermediate result, for example, querying a database, to obtain final reply information.

In other optional implementation solutions, the agent may not need to output the reply information. For example, if the to-be-processed information indicates to calculate and update related information of an order, after obtaining a calculation result based on the information processing model, the related information of the order in the database may be directly updated according to the calculation result, and the reply information does not need to be outputted to the user.

During actual application, each agent in the multi-agent system may include an information processing model, and each agent may execute the foregoing solution. Alternatively, some agents may each include an information processing model, and other agents each include only a relatively small dedicated model or another module capable of making a decision, as long as a corresponding function can be implemented. The foregoing solution may be applied to the agents including the information processing models, and other agents may not be involved in transfer operations, or may implement transfer operations in other manners.

According to the information processing method based on the multi-agent system provided in this embodiment, the multi-agent system can be constructed by using a plurality of agents. The multi-agent system is used to implement task processing, and the task is better completed by using the capabilities of the information processing models corresponding to the agents and cooperation between functions of the agents. In addition, any target agent in the multi-agent system receives the to-be-processed information, and if the to-be-processed information does not fall within a functional scope of the target agent, an agent matching the to-be-processed information can be determined by using the information processing model corresponding to the target agent, and the to-be-processed information is transferred to the matching agent for processing. Therefore, the analysis capability of the information processing model is used to quickly and accurately implement flowing of the to-be-processed information between the agents, and the to-be-processed information is processed by an appropriate agent, thereby effectively improving a task processing effect.

There may be a plurality of implementations of determining a matching agent. For example, the to-be-processed information and the names of the agents may be inputted into the information processing model. The names may reflect functions of the agents, for example, a "code agent", a "translation agent", and a "mathematics-question agent". The information processing model may analyze the to-be-processed information and the names of the agents, to determine a matching agent.

Alternatively, description information may be configured for each agent, and the matching agent may be determined by using the description information. Detailed descriptions are provided below.

Optionally, the determining, based on the information processing model when the to-be-processed information does not match the function corresponding to the target agent, the agent whose function matches the to-be-processed information includes:
inputting the to-be-processed information and description information of a function corresponding to each agent in the plurality of agents into the information processing model, to enable the information processing model to determine the agent whose function matches the to-be-processed information when the to-be-processed information does not match the function corresponding to the target agent.

Optionally, identifiers and description information corresponding to a plurality of agents may be inputted into the information processing model, and the information processing model outputs the identifier of the matching agent according to the description information.

Optionally, the information processing model may first output a conclusion about whether the to-be-processed information matches the function corresponding to the target agent, and then output the identifier of the matching agent when the to-be-processed information does not match the function corresponding to the target agent. Alternatively, the information processing model may directly output the identifier of the matching agent, and the target agent may determine, based on the identifier, that the to-be-processed information does not match the function corresponding to the target agent, and may send the to-be-processed information to the matching agent for processing.

The description information of the functions corresponding to the plurality of agents may be inputted into the information processing model in a plurality of manners, which may be inputted in a one-time manner or may be inputted in a step-by-step manner.

In an optional implementation, the description information of the function corresponding to the target agent may be inputted into the information processing model first. If the description information matches the to-be-processed information, corresponding reply information is directly generated. If the information processing model indicates that it cannot perform answering, description information of functions corresponding to other agents may be further inputted into the information processing model, so that the information processing model can select an appropriate agent based on the description information of the other agents.

Specifically, the inputting the to-be-processed information and the description information of the function corresponding to each agent in the plurality of agents into the information processing model includes:
inputting the to-be-processed information, the description information of the function corresponding to the target agent, and first prompt information into the information processing model, the first prompt information being used for prompting the information processing model to generate corresponding reply information when it is determined, according to the to-be-processed information and the description information, that the to-be-processed information matches the function corresponding to the target agent, and output preset information used for indicating that a reply cannot be made when the to-be-processed information does not match the function corresponding to the target agent; and
inputting the to-be-processed information, description information of functions corresponding to remaining agents, and second prompt information into the information processing model if an output of the information processing model is the preset information, the remaining agents being agents in the plurality of agents other than the target agent, and the second prompt information being used for prompting the information processing model to determine, according to the to-be-processed information and the description information corresponding to the remaining agents, the agent whose function matches the to-be-processed information.

For example, it is assumed that the to-be-processed information is a question of the user, and the first prompt information may include: "Please determine whether the question of the user falls within your capability range. If the question of the user falls within your capability range, please answer directly. If the question of the user does not fall within your capability range, please answer: I am not good at this".

Correspondingly, content inputted into the information processing model may include:
"You are an agent having [function description], please determine whether the question of the user falls within your capability range. If the question falls within your capability range, please answer directly. If the question does not fall within your capability range, please answer: I am not good at this; user: [question]".

The description information of the function corresponding to the target agent may be inserted into the position [function description], and the question of the user may be inserted into the position [question].

Optionally, because the information processing model has a capability of answering according to a question, the following prompt content may also be omitted from the first prompt information: generating corresponding reply information when it is determined, according to the to-be-processed information and the description information, that the to-be-processed information matches the function corresponding to the target agent. For example, the following content may be omitted from the information inputted into the information processing model: "If the question falls within your capability range, please answer directly".

Based on the foregoing content inputted into the information processing model, the preset information is "I am not good at this". If it is detected that the information processing model outputs the preset information, the to-be-processed information, the description information of the functions corresponding to the remaining agents, and the second prompt information may be further inputted into the information processing model, so that the information processing model determines the agent whose function matches the to-be-processed information.

For example, the second prompt information may be: "Please determine an agent that can answer the user question based on the description information of the functions corresponding to the following agents".

By means of the foregoing solution, the information processing model can be guided by means of stepwise prompting, to output reply information or a matching agent. Many times, the target agent has a capability of directly answering a user question, and in these cases, there is no need to further select a matching agent from other agents. Therefore, when the to-be-processed information is obtained, only the to-be-processed information and the description information of the target agent are inputted into the information processing model, and the description information of other agents does not need to be inputted but is introduced only when necessary, so that a data volume that needs to be processed can be effectively reduced. This is especially applicable to a scenario in which the to-be-processed information does not need to be transferred frequently.

In another optional implementation, one interaction with the information processing model may be used to generate the reply information or determine the matching agent.

Specifically, the inputting the to-be-processed information and the description information of the function corresponding to each agent in the plurality of agents into the information processing model includes:
inputting the to-be-processed information, the description information of the function corresponding to each agent in the plurality of agents, and third prompt information into the information processing model;
where the third prompt information is used for prompting the information processing model to determine, according to the to-be-processed information and the description information of the function corresponding to each agent, whether the to-be-processed information matches the function corresponding to the target agent, generate corresponding reply information when the to-be-processed information matches the function corresponding to the target agent, and determine the agent whose function matches the to-be-processed information when the to-be-processed information does not match the function corresponding to the target agent.

For example, the third prompt information may be: "If the question of the user falls within your capability range, please reply to the question of the user. If you cannot reply, please select an appropriate agent for processing according to the question of the user. When selecting an appropriate agent, please refer to the following description information".

In the foregoing manner, the reply information may be generated or the matching agent may be determined all at once, and there is no need to perform interaction with the information processing model a plurality of times, thereby effectively reducing the number of times of interaction. This is especially applicable to a scenario in which the to-be-processed information needs to be transferred frequently.

A prompt manner may be configured by the customer, to select whether the description information of the plurality of agents is inputted into the information processing model all at once or inputted into the information processing model in steps.

By setting the description information of the functions corresponding to the agents, the natural language understanding capability of the information processing model can be used to analyze and match the to-be-processed information and the description information, to select an appropriate agent from the agents to process the to-be-processed information. The description information can represent, as detailed as possible, the function that can be implemented by the information processing model, thereby effectively improving the accuracy of determining a matching agent.

Optionally, the target agent may obtain the description information of other agents in a plurality of manners. For example, the description information may be inputted by the customer. Alternatively, the agents maintain corresponding description information, and may forward the description information to each other.

Specifically, the target agent includes a memory (memory) module, and the method further includes:
sending the description information of the function corresponding to the target agent to the remaining agents in the multi-agent system after the multi-agent system is constructed, and receiving description information of corresponding functions that is sent by the remaining agents; and
storing the received description information into the memory module, to read the description information corresponding to each agent from the memory module and input the description information into the information processing model for processing when the to-be-processed information is obtained.

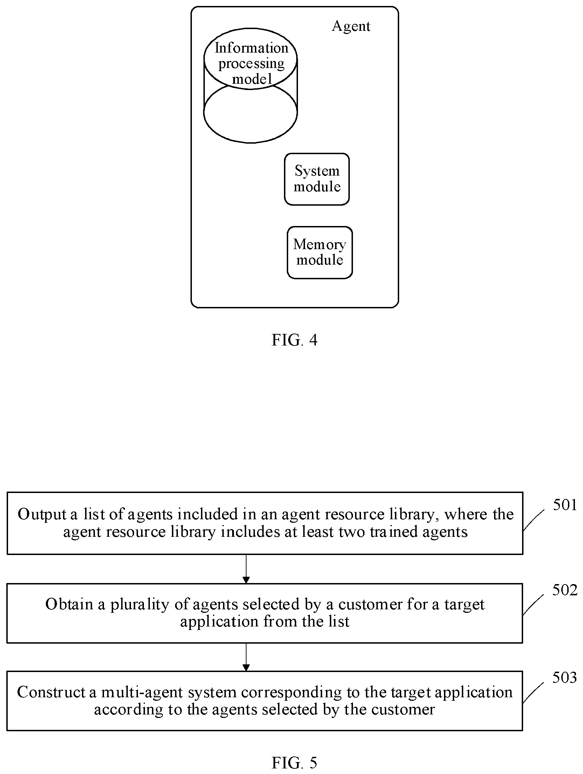

FIG. 4 is a schematic architecture diagram of an agent according to an embodiment of the present disclosure. As shown in FIG. 4, the target agent and other agents may each include an information processing model, a system module, and a memory module. The memory module may be configured to store description information.

Before the multi-agent system is constructed, each agent maintains its own description information. After the multi-agent system is constructed, the agents can forward description information to each other. For example, any target agent in the multi-agent system may send the description information of the target agent to other agents, or may receive description information sent by other agents, and store the description information into the memory module.

In this way, after a plurality of agents forward description information to each other, the memory module of each agent can store description information of the plurality of agents. When any target agent obtains the to-be-processed information, the matching agent may be determined by using the description information of the plurality of agents stored in the memory module, and the matching agent processes the to-be-processed information.

The plurality of agents forward the description information to each other, so that the target agent can prestore the description information of the plurality of agents. When the to-be-processed information is obtained, the to-be-processed information is directly processed according to the prestored description information, thereby improving efficiency of processing the to-be-processed information.

Based on the technical solution provided in the foregoing embodiment, optionally, information inputted into the information processing model further includes fourth prompt information; and the fourth prompt information is used for prompting the information processing model to reply to the to-be-processed information according to knowledge learned in a training process when it is determined that there is no agent in the plurality of agents whose function matches the to-be-processed information.

For example, the fourth prompt information may include: "If there is no suitable agent that can process the question of the user, please output a corresponding reply according to known information".

In an actual application, the information processing model may learn a lot of knowledge in a training process. Even if the current to-be-processed information does not belong to the field that the information processing model is good at, the information processing model may reply according to previously learned knowledge.

In this way, when there is an appropriate agent that can process the to-be-processed information, the to-be-processed information is transferred to the appropriate agent for processing, and when no appropriate agent can process the to-be-processed information, a reply is made according to the existing knowledge of the information processing model, thereby avoiding an ineffective transfer and improving the overall processing efficiency of the multi-agent system.

In one or more embodiments of the present disclosure, optionally, the to-be-processed information includes the input information of the user; and the target agent is an agent tagged as an entry agent in the multi-agent system; and the to-be-processed information inputted into the multi-agent system is received and processed by the entry agent.

Optionally, the entry agent may be set by the customer. When the to-be-processed information includes the input information of the user, an agent that can communicate with the user in a friendly manner in the multi-agent system may be selected as the entry agent.

When the multi-agent system as a whole interacts with the user, information inputted into the multi-agent system may be sent to the entry agent, and is processed by the entry agent. If the entry agent determines that the entry agent is not good at processing the to-be-processed information, the entry agent may forward the to-be-processed information to a matching agent for processing.

Optionally, there may be a plurality of implementations of tagging the entry agent. For example, a tag is added to an agent in the plurality of agents, to indicate that this agent is the entry agent. Alternatively, a field corresponding to the entry agent is set, and a value corresponding to the field is updated to an ID of an agent, so that the agent is tagged as the entry agent. When the user enters the to-be-processed information, which agent is the entry agent currently can be determined based on whether the agents have the corresponding tag or based on the value of the field corresponding to the entry agent, and the to-be-processed information is sent to the entry agent.

Optionally, the multi-agent system is configured to perform at least one round of dialog with the user; in any round, the to-be-processed information inputted into the multi-agent system includes input information of the user in this round; and
the sending the to-be-processed information to the matching agent for processing includes: sending the to-be-processed information to the matching agent for processing, and transferring the tag of the entry agent to the matching agent, so as to receive and process to-be-processed information inputted into the multi-agent system in a next round by using the matching agent.

Specifically, the multi-agent system as a whole may perform at least one round of dialog with the user. The at least one round of dialog may be recorded as a session (session). One session may generally include a plurality of rounds of interaction between the multi-agent system and the user, and each round of interaction may include one input of the user and one output of the multi-agent system.

In each round, inside the multi-agent system, the current entry agent may process input information of the user, to obtain corresponding reply information. If the current entry agent cannot process the input information, the current entry agent may transfer the input information to another agent in the multi-agent system for processing, to obtain the corresponding reply information, and the tag of the entry agent may be transferred to the another agent.

After the reply information of the current round is outputted to the user, the user may input the input information of the next round. In the multi-agent system, the another agent is used as an entry agent to process the input information of the user. In this way, after a plurality of rounds of interaction, the session may be ended.

For example, the multi-agent system interacts with the user as an intelligent customer service. An initial entry agent is a common question-answering agent. The question-answering agent answers questions raised by the user. After one or more rounds of interaction, the user starts to input a code-related requirement. If the question-answering agent determines that the question-answering agent is not good at answering this, the question-answering agent may send the code-related requirement to a code agent, and transfer the tag of the entry agent to the code agent. The code agent receives, and replies to, the code-related requirement inputted by the user as an entry agent corresponding to a subsequent round.

Optionally, the to-be-processed information in each round may include the input information of the user in the current round, and may further include interaction information in previous rounds, for example, the input information of the user and the output information of the multi-agent system in each previous round, so that references can be made to a historical context, to enable the multi-agent system to process the requirement of the user more accurately.

Optionally, the entry agent corresponding to the first round is an agent preselected in the multi-agent system. The method further includes: keeping the entry agent unchanged if the to-be-processed information matches the function of the target agent.

Specifically, the customer may preselect one entry agent from a plurality of agents as a default entry agent. After a session is started, the entry agent corresponding to the first round may be this default entry agent. During interaction with the user, the entry agent may change, and after the session ends, the default entry agent may be restored.

In a processing manner, the tag of the entry agent may be transferred to the preselected agent when a session ends, so that when a next session is started, the preselected agent is used as the entry agent to process to-be-processed information of the first round.

In another processing manner, the step of loading the entry agent may be performed each time a session is started. For example, when the session is started, the preselected agent in the multi-agent system may be determined, and this agent is set as the current entry agent.

Optionally, a control module may be set and configured to maintain an entry agent currently corresponding to the session. After release of the multi-agent system, a plurality of users may be allowed to interact with the multi-agent system at the same time. That is, a plurality of ongoing sessions may exist at the same time. The control module may maintain information corresponding to each session, for example, an entry agent corresponding to the session. In this way, each time the input information of the user is obtained, the input information is processed according to the entry agent corresponding to the session to which the input information belongs.

By using the foregoing solution, the to-be-processed information may be received and processed by using the entry agent in the multi-agent system, thereby implementing a quick and sequential response to the to-be-processed information. Moreover, when the to-be-processed information is transferred, the identity of the entry agent may be transferred. Because the user usually asks questions in different fields separately and continuously, overall processing efficiency of the multi-agent system can be effectively improved, and user experience can be improved.

In one or more embodiments of the present disclosure, optionally, the to-be-processed information includes the input information of the user; and the sending the to-be-processed information to the matching agent for processing includes:
obtaining perception configuration information, the perception configuration information being used for indicating whether to notify the user of a transfer of the to-be-processed information to the matching agent for processing; and
if yes, notifying the user of a transfer behavior and transferring the to-be-processed information to the matching agent for processing.

The perception configuration information may be set by the customer, or may be set by default. The perception configuration information is mainly used for controlling whether to notify the user of a transfer behavior between the agents.

Optionally, the plurality of agents may interact with the user in a group chat manner. On a group chat interface, the entry agent replies to a question inputted by the user. When the entry agent cannot answer the question of the user, a transfer operation is performed. If the perception configuration information indicates that a transfer behavior needs to be notified to the user, the user is notified of the transfer behavior first, and then the question is transferred to the matching agent for processing. The matching agent replies to the question of the user on the group chat interface.

For example, the following information may be outputted to the user, so as to notify the user of the transfer behavior: "Sorry, I cannot answer this question. The code agent can answer the question, and I transfer the question to the code agent for processing".

In the foregoing manner, the user can be notified of the transfer behavior between the agents, thereby improving user experience. In addition, whether the transfer behavior is notified may be configured according to an actual requirement, and personalized configuration requirements of the customer in different scenarios can be satisfied.

Based on the information processing method based on the multi-agent system provided in the foregoing embodiments, an embodiment of the present disclosure further provides a method for constructing a multi-agent system.

FIG. 5 is a schematic flowchart of a method for constructing a multi-agent system according to an embodiment of the present disclosure. The method may be applied to an application platform. The application platform may maintain a large quantity of agents. The customer may create an application on the platform, or may configure a plurality of agents for an application, to implement the application by using functions corresponding to the plurality of agents.

As shown in FIG. 5, the method may include the following steps.

Step 501: Output a list of agents included in an agent resource library, where the agent resource library includes at least two trained agents.

The trained agent may be an agent obtained through pretraining, or may be an agent obtained through pretraining and fine-tuning training. Supervised fine-tuning (Supervised Fine-Tuning, SFT) training samples may be used for training, or a manner such as reinforcement learning may be used for training an agent.

Optionally, an agent trained or uploaded by the customer may be obtained, and the agent is added to the agent resource library. The description information added by the customer for one or more agents in the agent resource library may further be obtained.

The description information may be description information corresponding to functions of the agents, is used to describe the functions in detail, and may be configured by the customer. For example, for an agent that focuses on mathematics questions, corresponding description information may be: This is an agent that focuses on mathematics questions, and the agent can solve mathematics questions in middle and primary schools, and has some natural language understanding and generation capabilities.

In addition, the platform may also provide some general-purpose agents. The agents provided by the platform and the agents trained by the customer are stored in the agent resource library, for use by the customer when creating an application subsequently.

When the customer needs to create an application, the platform may output the list of agents included in the agent resource library to the customer. The list may include identifiers, names, description information, and the like of the agents.

Step 502: Obtain a plurality of agents selected by a customer for a target application from the list.

Specifically, the customer may create a target application on the platform according to the list of agents included in the current agent resource library, and select a plurality of agents for the target application, so that based on a capability of the platform, the customer can construct an application of the customer by combining agents.

The target application may be any application that a customer expects to create, for example, it may be an application used to implement an intelligent customer service function.

Step 503: Construct a multi-agent system corresponding to the target application according to the agents selected by the customer.

Any agent in the multi-agent system is configured to perform the information processing method according to any embodiment of the present disclosure.

Specifically, after selecting a plurality of agents for the target application, the customer may bind the target application with the plurality of agents, to obtain a multi-agent system corresponding to the target application. Subsequently, the target application may be configured to implement a corresponding task, for example, interact with the user. When implementing the corresponding task, the multi-agent system corresponding to the target application responds to the to-be-processed information.

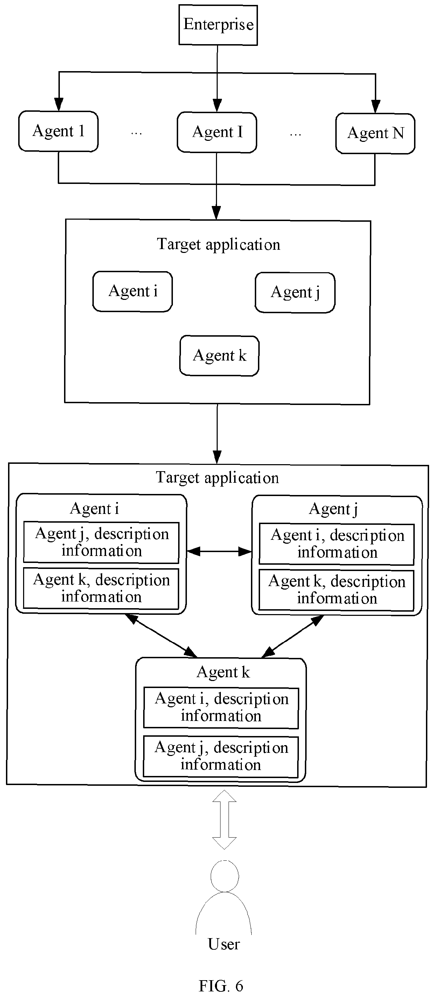

FIG. 6 is a schematic diagram of a construction principle of a multi-agent system of a target application according to an embodiment of the present disclosure. As shown in FIG. 6, the customer may be an enterprise. At the first stage, the enterprise may train a batch of agents having different functions, for example, agent 1, ..., agent I, ..., and agent N in the figure.

For example, at the first stage, the enterprise may create exclusive agents having particular functions in a manner such as an SFT, for example, a document question-answering agent, a reception agent, a code agent, a recommendation and marketing agent, or an agent that focuses on mathematical questions, and add description information of the corresponding function to each agent.

At the second stage, the enterprise may create a target application, and select a plurality of agents from the agent resource library. As shown in FIG. 6, the enterprise selects agent i, agent j, and agent k to construct an agent system corresponding to the target application.

Optionally, an entry agent and/or entry configuration information that is specified by the customer for the multi-agent system may be further obtained. The entry configuration information is used for indicating whether to transfer the tag of the entry agent to a matching agent when to-be-processed information does not match the function of the current entry agent.

In addition, perception configuration information configured by the customer for the multi-agent system may further be obtained; where the perception configuration information is used for indicating whether to notify the user of a transfer of the to-be-processed information to the matching agent for processing.

For example, the enterprise may select the mathematics question agent, the reception agent, and the document question-answering agent to construct the multi-agent system, and specify the reception agent as an entry agent, so as to create an intelligent customer service application of the enterprise. After being deployed on a platform, the application may provide an online intelligent customer service function. The entry configuration information and the perception configuration information may be set by default, or may support adjustment by the customer at any time.

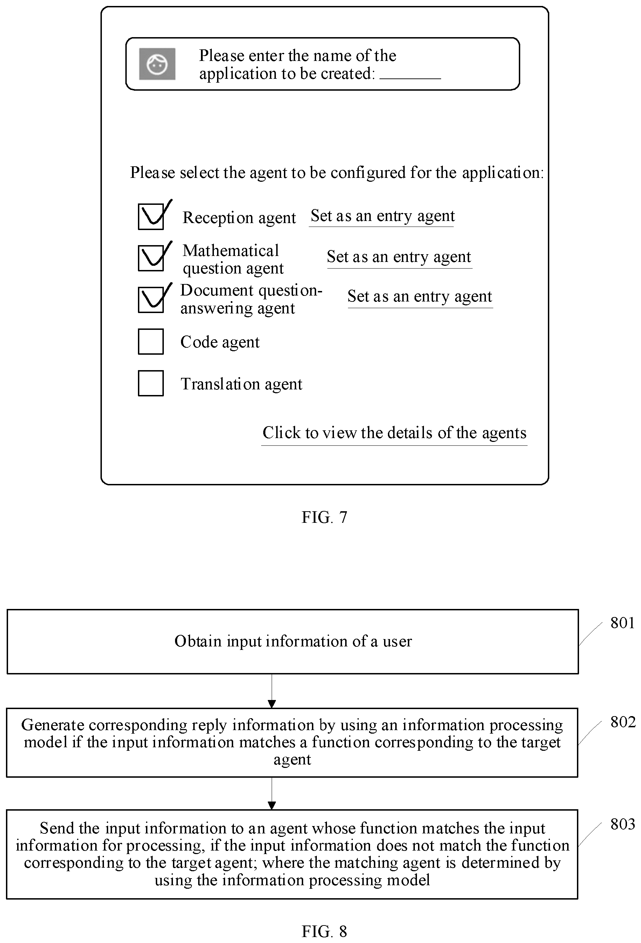

FIG. 7 is a schematic diagram of an interaction interface according to an embodiment of the present disclosure. As shown in FIG. 7, on the interaction interface, a list of agents in the agent resource library may be presented, to allow the user to create and input a name of the target application and select a plurality of agents for the target application from the list. In addition, functions such as setting an entry agent may be further provided.

Optionally, after the multi-agent system corresponding to the target application is constructed, a notification message may be sent to each agent in the multi-agent system. The notification message is used for indicating the plurality of agents to mutually forward description information of functions corresponding to the plurality of agents.

Specifically, at the third stage, after the multi-agent system is constructed, the platform may instruct the plurality of agents to forward description information to each other. Optionally, a multi-agent group chat manner may be used to allow each agent to simultaneously send an ID (identifier) and description information to other agents.

For example, the agent i may send the ID and description information of the agent i to the agent j and the agent k. After receiving the ID and the description information, the agent j and the agent k may store the ID and description information into memory modules thereof. Specifically, the memory module may include an information queue, and IDs and description information of the agents may be stored in the information queue.

The agent j and the agent k may also respectively send their IDs and description information to other agents. After the mutual forwarding, each agent in the multi-agent system maintains its own ID and description information as well as the IDs and description information of other agents.

In this way, a plurality of agents send their IDs and description information of corresponding functions to each other in a traversing manner, so that the plurality of agents can inform each other of their description information in a natural language communication manner, and therefore accurately and comprehensively obtain information of each agent in the multi-agent system, thereby facilitating a subsequent accurate transfer operation on to-be-processed information.

In another optional implementation, alternatively, after the multi-agent system is constructed, the platform may directly send description information of each agent to other agents.

At the fourth stage, each agent may configure its own prompt (prompt), and the prompt and to-be-processed information may be inputted together into the information processing model of the agent for processing. Optionally, for any target agent, the prompt may include a system prompt part and a memory part that are respectively configured to prompt description information of the target agent and description information of other agents.

Optionally, in an intelligent customer service scenario, the to-be-processed information may include input information of a user. When the user makes an online request for the first time, input information of the user is sent to the entry agent, and the entry agent responds to the input information of the user. The entry agent may be undertaken by an agent having better capabilities in terms of dialog terms and user guidance.

When there is a plurality of rounds of interaction with the user, optionally, the to-be-processed information of each round may include input information of the user in the current round, and may further include interaction information of previous rounds (input information of the user and reply information of the agent in each previous round).

For example, in each round, content inputted into the information processing model of the entry agent may include:
"System prompt: you are an agent having [function description]. If a question not within your capability range is encountered, please refer to IDs and functional descriptions of the following several agents to select an appropriate agent according to the historical context of the user and output the corresponding ID. If no appropriate agent can process the task, please output a corresponding answer according to known information.

Memory: agent IDs and function description of the agents:
[agent ID1: function description];
[agent ID2: function description]; and
[agent ID3: function description]; and
user history: [user history]."

The description information of the target agent is inserted into the position [function description]. The IDs and description information of other agents are inserted into the memory. The interaction information of previous rounds and the input information of the current round are inserted into the position [user history].

The information processing model may output the ID of the matching agent according to the foregoing content. The entry agent may send the user history to the matching agent, and the tag of the entry agent may be transferred to the matching agent.

If the information processing model does not output the ID of the agent, but directly outputs the corresponding reply information, the entry agent directly outputs the reply information to the user, and continues to dialog with the user until the interaction is completed.

According to the method for constructing a multi-agent system provided in this embodiment, a customer can be allowed to construct an agent resource library having exclusive functions in a training manner of the customer, and construct a target application of the customer by combining agents. A plurality of agents notify each other of their description information in a natural language communication manner. In a process of using the target application, when input information of a user comes in, the input information can flow among the plurality of agents, so that a natural language understanding capability of an information processing model can be used, and the plurality of agents can learn about functions of other agents through dialogs, thereby improving a task processing effect in an actual application. In addition, a plurality of agents can be organized without re-training, no additional calculation overhead is needed, and no gating selection is needed, thereby avoiding design of a gating model. The natural language understanding capability of the information processing model is directly used, thereby implementing rapid semantic understanding and invoking, reducing system complexity, and improving an overall processing effect of the system.

In the foregoing embodiments, the response to the to-be-processed information is implemented by configuring the entry agent. In another optional implementation, the operation of configuring the entry agent may alternatively be canceled. After the to-be-processed information is obtained, the to-be-processed information is randomly sent to an agent, or the to-be-processed information is processed by using the agent in the previous round.

Based on the technical solutions provided in the foregoing embodiments, optionally, function and/or capability requirement information inputted by the customer for one or more agents in the agent resource library may further be obtained. According to the function and/or capability requirement information of each agent, a capability enhancement manner corresponding to each agent is determined, to process each agent according to the corresponding capability enhancement manner;
where the capability enhancement manner includes at least one of the following: performing fine tuning on an information processing model in the agent, performing reinforcement learning on the single agent, performing reinforcement learning together with other agents, or configuring prompt information for the agent; where the fine tuning may include supervised fine-tuning, or may include unsupervised or other types of fine tuning.

Optionally, the capability requirement information may be used for representing a requirement of the customer on a capability of the information processing model. If the requirement is relatively high, a targeted capability enhancement operation may be performed on the agent.

Specifically, the initial information processing model in the agent may be a pre-trained information processing model and has a natural language processing capability. Based on this, to improve the capability of the agent so that the agent can better implement a corresponding function, the capability of the agent may be enhanced. The capability enhancement may specifically have the following several cases.

In a first case, if the function corresponding to the agent needs to have a relatively strong specific capability, for example, needs to process code, a conventional information processing model pre-trained by using a natural language may be inadequate. In this case, supervised fine-tuning may be performed on the pre-trained information processing model, and the supervised fine-tuning is implemented by using code data.

Alternatively, although the function of the agent also processes the natural language, the customer has a relatively high capability requirement on the agent. For example, the customer hopes to further improve performance of processing the natural language by the agent, and then supervised fine-tuning may also be performed on the information processing model with reference to a specific task.

In a second case, if the agent corresponds to a relatively common function, or the capability requirement information of the agent is relatively low, supervised fine-tuning may not be performed, and the capability enhancement is directly performed by means of configuring description information. After the description information is configured, the description information may be inputted into the information processing model as a prompt, so that the information processing model can perform a corresponding function according to the description information.

In a third case, if it is expected that the agent enhances a capability of interacting with the environment, the agent may be trained in a manner such as reinforcement learning. Reinforcement learning may include performing reinforcement learning on a single agent, or may include performing reinforcement learning jointly on a plurality of agents, which may be selected according to an actual requirement.

In a fourth case, the foregoing capability enhancement manners may be combined. For example, description information may be configured for the agent, supervised fine-tuning may be performed on the information processing model in the agent, and the agent may be further trained with reference to reinforcement learning.

In the foregoing manners, the capability enhancement manner of the agent can be determined based on an actual requirement. The pre-trained agent may be directly used, or may be configured with prompt information or be fine-tuned for use, or may be trained with reinforcement learning for use, to satisfy functional and capability requirements of the agent in different scenarios, and improve an overall processing effect of the multi-agent system in different scenarios.

An embodiment of the present disclosure further provides an information processing method based on a multi-agent system. The method is applied to an online use stage of the multi-agent system. The executive entity may be an application platform, and more specifically, may be a control module in the application platform. The method includes:
obtaining to-be-processed information corresponding to the multi-agent system;
determining an entry agent in the multi-agent system; and
sending the to-be-processed information to the entry agent, to enable the entry agent to generate corresponding reply information when the to-be-processed information matches a function of the entry agent, determine, based on an information processing model, an agent in the multi-agent system whose function matches the to-be-processed information when the to-be-processed information does not match the function of the entry agent, and send the to-be-processed information to the matching agent for processing.

The entry agent may be a target agent that processes the to-be-processed information. The to-be-processed information may include input information of a user. After the reply information outputted by the entry agent is obtained, the reply information may be fed back to the user. If the to-be-processed information is transferred to another agent for processing, after the reply information outputted by the another agent is obtained, the reply information may be fed back to the user.

For specific implementation principles, processes, and beneficial effects of the method provided in this embodiment, reference can be made to the foregoing embodiments, and details are not described herein again.

An embodiment of the present disclosure further provides another information processing method based on a multi-agent system, applied to an intelligent customer service scenario. The multi-agent system includes a plurality of agents, and the method is applied to a target agent in the plurality of agents. Optionally, the target agent may include an information processing model.

FIG. 8 is a schematic flowchart of another information processing method based on a multi-agent system according to an embodiment of the present disclosure. As shown in FIG. 8, the method includes the following steps.

Step 801: Obtain input information of a user.

Step 802: Generate corresponding reply information by using an information processing model if the input information matches a function corresponding to the target agent.

Specifically, the corresponding reply information is directly generated and fed back to the user if the to-be-processed information matches the function corresponding to the target agent.

Step 803: Send the input information to an agent whose function matches the input information for processing, if the input information does not match the function corresponding to the target agent; where the matching agent is determined by using the information processing model.

For specific implementation principles and processes of the method provided in this embodiment, reference can be made to the foregoing embodiments, and details are not described herein again.

In this embodiment, the multi-agent system can be used to interact with the user. In an interaction process, the target agent can transfer a question that cannot be resolved by the target agent to an agent good at the question for processing, so that the question of the user flows among a plurality of agents, thereby facilitating a quick and accurate selection of an appropriate agent to answer the question of the user, and improving an effect of interacting with the user.

Optionally, a plurality of agents in the multi-agent system may interact with the user in a group chat manner, and the input information and the reply information are presented on a group chat interface.

Optionally, the sending the input information to the agent whose function matches the input information for processing includes:
obtaining perception configuration information, the perception configuration information being used for indicating whether to notify the user of a transfer of the to-be-processed information to the matching agent for processing; and
if yes, notifying the user of a transfer behavior by using the group chat interface, and transferring the input information to the matching agent for processing, to enable the matching agent to generate corresponding reply information and presents the corresponding reply information to the user by using the group chat interface.

Specifically, in the group chat interface, after the user inputs the question, the target agent may answer the question of the user. When the target agent cannot answer the question of the user, the transfer operation is performed. If the perception configuration information indicates that a transfer behavior needs to be notified to the user, the user is first notified of the transfer behavior, and then the question is transferred to a matching agent for processing. The matching agent answers the question of the user in the group chat interface.

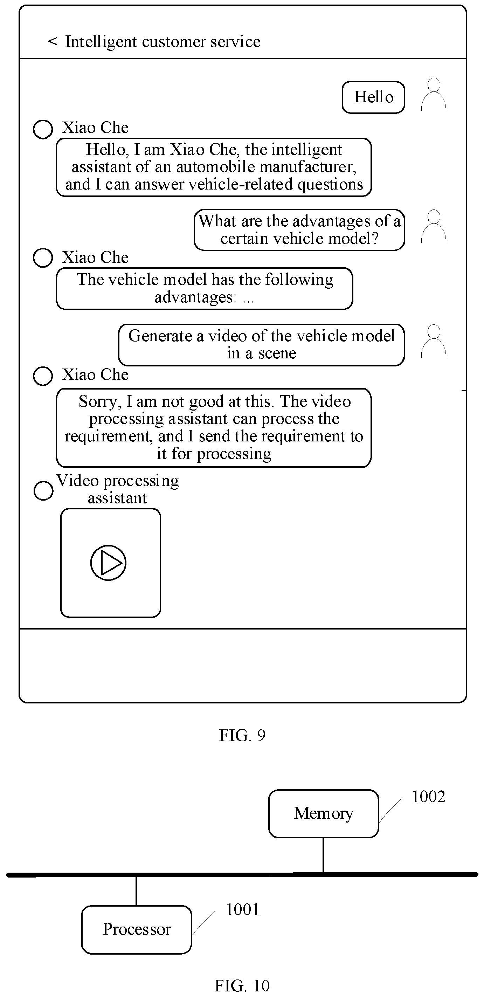

For example, the multi-agent system is a system corresponding to an intelligent customer service application configured by a vehicle enterprise customer. The intelligent customer service application may be an intelligent customer service application used for answering vehicle-related questions for users. The corresponding multi-agent system may include the following agents: Xiao Che (a document question-answering agent), an image processing assistant (an image agent), a video processing assistant (a video agent), and the like. Xiao Che is selected by the enterprise as a default entry agent. FIG. 9 is a schematic diagram of a group chat interface according to an embodiment of the present disclosure. As shown in FIG. 9, for an interaction process between the multi-agent system and a user, reference can be made to the following example.

"User: Hello.

Xiao Che: Hello, I am Xiao Che, the intelligent assistant of an automobile manufacturer, and I can answer vehicle-related questions.

User: What are the advantages of a certain vehicle model?

Xiao Che: The vehicle model has the following advantages: ...

User: Generate a video of the vehicle model in a scene.

Xiao Che: Sorry, I am not good at this. The video processing assistant can process the requirement, and I send the requirement to it for processing.

Video processing assistant: Video."

In the foregoing manner, the user can be notified of the transfer behavior between the agents, thereby improving user experience. In addition, whether to notify the transfer behavior can be configured according to an actual requirement, and personalized configuration requirements of the customer in different scenarios can be satisfied.

An embodiment of the present disclosure further provides an information processing method based on a multi-agent system, applied to a scenario in which an agent autonomously plans a task process. The multi-agent system includes a plurality of agents. The method is applied to a target agent in the plurality of agents, and the method includes:
obtaining to-be-processed task information;
dividing the task information based on an information processing model, to obtain a plurality of subtasks; and
for any subtask, if the subtask does not match the function corresponding to the target agent, sending the subtask to an agent whose function matches the subtask for processing; where the matching agent is determined by using the information processing model.

The information processing model may plan the task to be processed by the agent, divide the task to obtain a plurality of subtasks, and sequentially execute the subtasks according to an execution sequence. After the plurality of subtasks are executed, processing on the task is completed.

When executing each subtask, if the subtask matches the function corresponding to the target agent, the corresponding subtask processing result is directly generated by using the information processing model; if the subtask does not match the function corresponding to the target agent, the matching agent may be determined by using the information processing model, and the subtask is transferred to the matching agent for processing.

For example, the task information is: making a Chinese and English bilingual movie according to requirements, and designing a script for regular playback.

The target agent may plan the foregoing task, for example, may divide the task into the following subtasks: 1. generate a script according to the requirements; 2. translate the script; 3. generate a plurality of pictures according to the script; 4. make a movie according to the pictures; 5. write a code script for regular playback.

The target agent is good at planning and natural language processing. Therefore, after planning the task, the target agent may execute the first subtask, and generate a script according to the requirements. After the first subtask is executed, the target agent may determine that the target agent is not good at translation. In this case, the target agent may send the script to the translation agent, and instruct the translation agent to translate the script. The processing procedures of other subtasks are similar. In each step, an appropriate agent may be selected for the current subtask based on description information of each agent to perform processing until the entire task is completed.

Optionally, the target agent may be an entry agent, and the entry agent may be fixed during task execution.

Optionally, the task information may be a piece of text, or may be presented in a form of a flowchart. The multi-agent system may sequentially execute a plurality of nodes in the flowchart according to the flowchart, to complete the corresponding task.

For implementation principles of the steps in this embodiment, reference can be made to the foregoing embodiments, and only the to-be-processed information needs to be replaced with the subtasks. For specific processing procedures and beneficial effects, reference can be made to the foregoing embodiments, and details are not described herein again.

An embodiment of the present disclosure further provides a multi-agent system, including a plurality of agents, and the agents are configured to perform the methods in the embodiments related to FIG. 2 and FIG. 8.

An embodiment of the present disclosure further provides a multi-agent-based application platform, including a control module and an agent resource library; and the control module is configured to perform the method in the embodiment related to FIG. 5.

An embodiment of the present disclosure further provides an information processing method, which may be applied to a system implemented based on a plurality of information processing models. The method includes:
obtaining to-be-processed information;
inputting the to-be-processed information and description information of functions corresponding to a plurality of information processing models into a target information processing model, to enable the target information processing model to output corresponding reply information when the to-be-processed information matches a function of the target information processing model, and determine an information processing model in the plurality of information processing models that matches the to-be-processed information when the to-be-processed information does not match the function of the target information processing model; where the target information processing model is any information processing model in the plurality of information processing models; and
sending the to-be-processed information to the matching information processing model for processing, if an output of the target information processing model is used to represent the matching information processing model.

A difference between this embodiment and the foregoing embodiments lies in that in this embodiment, agents do not need to be constructed, and a plurality of information processing models are directly used to process to-be-processed information. Although capabilities of the information processing models may be less comprehensive than those of the agents, processing of some tasks can also be completed, especially tasks mainly implemented based on natural languages.

For implementation principles of the steps in this embodiment, reference can be made to the foregoing embodiments, and only the agents need to be replaced with the information processing models. For specific processing procedures and beneficial effects, reference can be made to the foregoing embodiments, and details are not described herein again.

Corresponding to the foregoing methods, an embodiment of the present disclosure further provides an information processing apparatus based on a multi-agent system, and the multi-agent system includes a plurality of agents. The apparatus is applied to a target agent, and the target agent is any agent in the plurality of agents. The apparatus includes:
a first determining module, configured to determine to-be-processed information corresponding to the target agent;
a second determining module, configured to determine, based on an information processing model when the to-be-processed information does not match a function corresponding to the target agent, an agent whose function matches the to-be-processed information; and
a sending module, configured to send the to-be-processed information to the matching agent for processing.

An embodiment of the present disclosure further provides an apparatus for constructing a multi-agent system, including:
an output module, configured to output a list of agents included in an agent resource library, where the agent resource library includes at least two trained agents;
an obtaining module, configured to obtain a plurality of agents selected by a customer for a target application from the list; and
a construction module, configured to construct a multi-agent system corresponding to the target application according to the agents selected by the customer.

An embodiment of the present disclosure further provides an information processing apparatus based on a multi-agent system, including:
an obtaining module, configured to obtain to-be-processed information corresponding to the multi-agent system;
a determining module, configured to determine an entry agent in the multi-agent system; and
a sending module, configured to send the to-be-processed information to the entry agent, to enable the entry agent to generate corresponding reply information when the to-be-processed information matches a function of the entry agent, and determine, based on an information processing model, an agent in the multi-agent system whose function matches the to-be-processed information when the to-be-processed information does not match the function of the entry agent, and send the to-be-processed information to the matching agent for processing.

An embodiment of the present disclosure further provides an information processing apparatus based on a multi-agent system, and the multi-agent system includes a plurality of agents. The apparatus is applied to a target agent in the plurality of agents. The apparatus includes:
an obtaining module, configured to obtain input information of a user;
a generation module, configured to generate corresponding reply information by using an information processing model if the input information matches a function corresponding to the target agent; and
a sending module, configured to send the input information to an agent whose function matches the input information for processing, if the input information does not match the function corresponding to the target agent; where the matching agent is determined by using the information processing model.

An embodiment of the present disclosure further provides an information processing apparatus, the method including:
an obtaining module, configured to obtain to-be-processed information;
a determining module, configured to input the to-be-processed information and description information of functions corresponding to a plurality of information processing models into a target information processing model, to enable the target information processing model to output corresponding reply information when the to-be-processed information matches a function of the target information processing model, and determine an information processing model in the plurality of information processing models that matches the to-be-processed information when the to-be-processed information does not match the function of the target information processing model; where the target information processing model is any information processing model in the plurality of information processing models; and
a sending module, configured to send the to-be-processed information to the matching information processing model for processing, if an output of the target information processing model is used to represent the matching information processing model.

For specific implementation principles and effects of the apparatus provided in the embodiments of the present disclosure, reference can be made to the foregoing embodiments. Details are not described herein again.

FIG. 10 is a schematic structural diagram of an electronic device according to an embodiment of the present disclosure. As shown in FIG. 10, the electronic device of this embodiment may include:
at least one processor 1001; and a memory in a communication connection with the at least one processor 1002; where the memory 1002 stores instructions executable by the at least one processor 1001, and the instructions are executed by the at least one processor 1001 to enable the electronic device to perform the method according to any one of the foregoing embodiments. Optionally, the memory 1002 may be independent, or may be integrated with the processor 1001.

For implementation principles and technical effects of the electronic device provided in this embodiment, reference can be made to the foregoing embodiments, and details are not described herein again.

An embodiment of the present disclosure further provides a computer-readable storage medium, where the computer-readable storage medium stores computer executable instructions, and when a processor executes the computer executable instructions, the method according to any one of the foregoing embodiments is implemented.

An embodiment of the present disclosure further provides a computer program product, including a computer program, and when the computer program is executed by a processor, the method according to any one of the foregoing embodiments is implemented.

In the several embodiments provided in the present disclosure, it should be understood that the disclosed devices and methods may be implemented in other manners. For example, the device embodiments described above are merely examples. For example, division into the modules is merely a logical function division and there may be other division manners in actual implementation. For example, a plurality of modules may be combined or integrated into another system, or some features may be ignored or not performed.

The foregoing integrated modules implemented in a form of software functional modules may be stored in a computer readable storage medium. The software functional modules are stored in a storage medium, and include several instructions for enabling a computer device (which may be a personal computer, a server, a network device, or the like) or a processor to perform some steps of the methods described in the embodiments of the present disclosure.

It should be understood that the processor may be a central processing unit (Central Processing Unit, CPU for short), or may be another general-purpose processor, a digital signal processor (Digital Signal Processor, DSP for short), an application specific integrated circuit (Application Specific Integrated Circuit, ASIC for short), or the like. The general-purpose processor may be a microprocessor, or the processor may be any conventional processor or the like. Steps of method disclosed with reference to this application may be directly performed and completed by using a hardware processor, or may be performed and completed by using a combination of hardware and software modules in the processor. The memory may include a highspeed RAM memory, or may further include a non-volatile memory NVM, for example, at least one magnetic disk memory, or may be a USB flash drive, a removable hard disk, a read-only memory, a magnetic disk, an optical disc, or the like.

The foregoing storage medium may be implemented by any type of volatile or non-volatile storage devices or a combination thereof, such as a static random-access memory (Static Random-Access Memory, SRAM), an electrically erasable programmable read only memory (Electrically Erasable Programmable Read Only Memory, EEPROM), an erasable programmable read only memory (Erasable Programmable Read Only Memory, EPROM), a programmable read-only memory (Programmable Read-Only Memory, PROM), a read-only memory (Read-Only Memory, ROM), a magnetic memory, a flash memory, a magnetic disk, or an optical disc. The storage medium may be any available medium accessible to a general-purpose or dedicated computer.

For example, a storage medium is coupled to a processor, so that the processor can read information from the storage medium and write information into the storage medium. Certainly, the storage medium may be a component of the processor. The processor and the storage medium may be located in an application-specific integrated circuit. Certainly, the processor and the storage medium may also exist in an electronic device or a main control device as discrete components.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. Without more limitations, an element defined by the sentence "including a/an/one" does not exclude that there are still other same elements in the process, method, object, or apparatus including the element.

The sequence numbers of the foregoing embodiments of the present disclosure are for descriptive purposes only and do not indicate any preference of the embodiments.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of the present disclosure essentially or the part contributing to the prior art may be implemented in a form of a software product. The computer software product is stored in a storage medium (such as a ROM/RAM, a magnetic disk, or an optical disc), and includes several instructions for causing a terminal device (which may be a mobile phone, a computer, a server, an air conditioner, a network device, or the like) to perform the methods described in the embodiments of the present disclosure.

The foregoing embodiments are merely preferred embodiments of the present disclosure, and do not therefore limit the patent scope of the present disclosure. Any equivalent structure or equivalent process transformation made by using the specification and the accompanying drawings of the present disclosure, or any direct or indirect application to other related technical fields, is similarly included in the patent protection scope of the present disclosure.

## Claims

1. An information processing method based on a multi-agent system, the multi-agent system comprising a plurality of agents; wherein the method is applied to a target agent, the target agent being any agent in the plurality of agents, and the method comprises:
determining to-be-processed information corresponding to the target agent;
determining, based on an information processing model when the to-be-processed information does not match a function corresponding to the target agent, an agent whose function matches the to-be-processed information; and
sending the to-be-processed information to the matching agent for processing.

2. The method according to claim 1, wherein the information processing model is configured to: generate corresponding reply information when the to-be-processed information matches the function corresponding to the target agent; and output an identifier of the agent matching the to-be-processed information when the to-be-processed information does not match the function corresponding to the target agent.

3. The method according to claim 1 or 2, wherein the determining, based on an information processing model when the to-be-processed information does not match a function corresponding to the target agent, an agent whose function matches the to-be-processed information comprises:
inputting the to-be-processed information and description information of a function corresponding to each agent in the plurality of agents into the information processing model, to enable the information processing model to determine the agent whose function matches the to-be-processed information when the to-be-processed information does not match the function corresponding to the target agent.

4. The method according to claim 3, wherein the inputting the to-be-processed information and description information of a function corresponding to each agent in the plurality of agents into the information processing model comprises:
inputting the to-be-processed information, the description information of the function corresponding to the target agent, and first prompt information into the information processing model, the first prompt information being used for prompting the information processing model to generate corresponding reply information when it is determined, according to the to-be-processed information and the description information, that the to-be-processed information matches the function corresponding to the target agent, and output preset information used for indicating that a reply cannot be made when the to-be-processed information does not match the function corresponding to the target agent; and
inputting the to-be-processed information, description information of functions corresponding to remaining agents, and second prompt information into the information processing model if an output of the information processing model is the preset information, the remaining agents being agents in the plurality of agents other than the target agent, and the second prompt information being used for prompting the information processing model to determine, according to the to-be-processed information and the description information corresponding to the remaining agents, the agent whose function matches the to-be-processed information.

5. The method according to claim 3, wherein the inputting the to-be-processed information and description information of a function corresponding to each agent in the plurality of agents into the information processing model comprises:
inputting the to-be-processed information, the description information of the function corresponding to each agent in the plurality of agents, and third prompt information into the information processing model;
wherein the third prompt information is used for prompting the information processing model to determine, according to the to-be-processed information and the description information of the function corresponding to each agent, whether the to-be-processed information matches the function corresponding to the target agent, generate corresponding reply information when the to-be-processed information matches the function corresponding to the target agent, and determine the agent whose function matches the to-be-processed information when the to-be-processed information does not match the function corresponding to the target agent.

6. The method according to any one of claims 3 to 5, wherein information inputted into the information processing model further comprises fourth prompt information; and
the fourth prompt information is used for prompting the information processing model to reply to the to-be-processed information according to knowledge learned in a training process when it is determined that there is no agent in the plurality of agents whose function matches the to-be-processed information.

7. The method according to any one of claims 1 to 6, wherein the to-be-processed information comprises input information of a user;
the target agent is an agent tagged as an entry agent in the multi-agent system; and the to-be-processed information inputted into the multi-agent system is received and processed by the entry agent.

8. The method according to claim 7, wherein the multi-agent system is configured to perform at least one round of dialog with the user; in any round, the to-be-processed information inputted into the multi-agent system comprises input information of the user in the round; and
the sending the to-be-processed information to the matching agent for processing comprises:
sending the to-be-processed information to the matching agent for processing, and transferring a tag of the entry agent to the matching agent, to receive and process to-be-processed information inputted into the multi-agent system in a next round by using the matching agent;
wherein the entry agent corresponding to the first round is an agent preselected in the multi-agent system.

9. The method according to any one of claims 1 to 8, wherein the to-be-processed information comprises input information of a user; and the sending the to-be-processed information to the matching agent for processing comprises:
obtaining perception configuration information, the perception configuration information being used for indicating whether to notify the user of a transfer of the to-be-processed information to the matching agent for processing; and
if yes, notifying the user of a transfer behavior and transferring the to-be-processed information to the matching agent for processing.

10. The method according to any one of claims 3 to 6, wherein the method further comprises:
sending description information of the function corresponding to the target agent to remaining agents in the multi-agent system after the multi-agent system is constructed, and receiving description information of corresponding functions that is sent by the remaining agents; and
storing the received description information into a memory module, to read the description information corresponding to each agent from the memory module and input the description information into the information processing model for processing when the to-be-processed information is obtained.

11. A method for constructing a multi-agent system, comprising:
outputting a list of agents comprised in an agent resource library, wherein the agent resource library comprises at least two trained agents;
obtaining a plurality of agents selected by a customer for a target application from the list; and
constructing a multi-agent system corresponding to the target application according to the agents selected by the customer;
wherein any agent in the multi-agent system is configured to perform the method according to any one of claims 1 to 10.

12. The method according to claim 11, further comprising:
sending a notification message to each agent in the multi-agent system after the multi-agent system corresponding to the target application is constructed, the notification message being used for indicating the plurality of agents to mutually forward description information of functions corresponding to the plurality of agents.

13. The method according to claim 11 or 12, further comprising at least one of:
obtaining an agent trained or uploaded by the customer, and adding the agent trained or uploaded by the customer to the agent resource library;
obtaining description information added by the customer for one or more agents in the agent resource library;
obtaining an entry agent and/or entry configuration information that is specified by the customer for the multi-agent system, the entry configuration information being used for indicating whether to transfer a tag of the entry agent to a matching agent when to-be-processed information does not match a function of a current entry agent; and
obtaining perception configuration information configured by the customer for the multi-agent system; wherein the perception configuration information is used for indicating whether to notify a user of a transfer of the to-be-processed information to the matching agent for processing.

14. The method according to claim 11 or 13, further comprising:
obtaining function and/or capability requirement information inputted by the customer for one or more agents in the agent resource library; and
determining a capability enhancement manner corresponding to each agent according to the function and/or capability requirement information of the each agent, to process each agent according to the corresponding capability enhancement manner;
wherein the capability enhancement manner comprises at least one of the following: performing fine tuning on an information processing model in the agent, performing reinforcement learning on the single agent, performing reinforcement learning together with other agents, or configuring prompt information for the agent.

15. An information processing method based on a multi-agent system, comprising:
obtaining to-be-processed information corresponding to the multi-agent system;
determining an entry agent in the multi-agent system; and
sending the to-be-processed information to the entry agent, to enable the entry agent to generate corresponding reply information when the to-be-processed information matches a function of the entry agent, determine, based on an information processing model, an agent in the multi-agent system whose function matches the to-be-processed information when the to-be-processed information does not match the function of the entry agent, and send the to-be-processed information to the matching agent for processing.

16. An information processing method based on a multi-agent system, the multi-agent system comprising a plurality of agents; wherein the method is applied to a target agent in the plurality of agents, and the method comprises:
obtaining input information of a user;
generating corresponding reply information by using an information processing model if the input information matches a function corresponding to the target agent; and
sending the input information to an agent whose function matches the input information for processing, if the input information does not match the function corresponding to the target agent; wherein the matching agent is determined by using the information processing model.

17. The information processing method according to claim 16, wherein the input information and the reply information are presented on a group chat interface; and
the sending the input information to an agent whose function matches the input information for processing comprises:
obtaining perception configuration information, the perception configuration information being used for indicating whether to notify the user of a transfer of the to-be-processed information to the matching agent for processing; and
if yes, notifying the user of a transfer behavior by using the group chat interface, and transferring the input information to the matching agent for processing, to enable the matching agent to generate corresponding reply information and present the corresponding reply information to the user by using the group chat interface.

18. An information processing method, wherein the method comprises:
obtaining to-be-processed information;
inputting the to-be-processed information and description information of functions corresponding to a plurality of information processing models into a target information processing model, to enable the target information processing model to output corresponding reply information when the to-be-processed information matches a function of the target information processing model, and determine an information processing model in the plurality of information processing models that matches the to-be-processed information when the to-be-processed information does not match the function of the target information processing model; wherein the target information processing model is any information processing model in the plurality of information processing models; and
sending the to-be-processed information to the matching information processing model for processing, if an output of the target information processing model is used to represent the matching information processing model.

19. A multi-agent system, comprising a plurality of agents, the agents being configured to perform the method according to any one of claims 1 to 10, 16, and 17.

20. A multi-agent-based application platform, comprising a control module and an agent resource library;
wherein the control module is configured to perform the method according to any one of claims 11 to 15.

21. An electronic device, comprising:
at least one processor; and
a memory in a communication connection with the at least one processor;
wherein the memory stores instructions executable by the at least one processor, and the instructions are executed by the at least one processor to enable the electronic device to perform the method according to any one of claims 1 to 18.

22. A computer-readable storage medium, wherein the computer-readable storage medium stores computer executable instructions, and when a processor executes the computer executable instructions, the method according to any one of claims 1 to 18 is implemented.

23. A computer program product, comprising a computer program, wherein the method according to any one of claims 1 to 18 is implemented when the computer program is executed by a processor.
